# EUROPEAN PATENT APPLICATION

(11) **EP 4 546 496 A1**
(43) Date of publication of application: **30.04.2025**
(21) Application number: 24192738.3
(22) Date of filing: 02.08.2024
(51) Int. Cl.: H01M 10/058, H01M 50/103, H01M 50/107, H01M 50/15, H01M 50/152, H01M 50/342, H01M 50/474

(54) **BOTTOM-VENTED SECONDARY BATTERY AND MANUFACTURING METHOD THEREOF**

(30) Priority: 25.10.2023 KR 20230143655
(71) Applicant: SAMSUNG SDI CO., LTD., Giheung-gu Yongin-si, Gyeonggi-do 17084 (KR)
(72) Inventor: BYUN, Sangwon, 17084 Yongin-si (KR); KIM, Sanghoon, 17084 Yongin-si (KR); WON, Narae, 17084 Yongin-si (KR); EUM, Yul, 17084 Yongin-si (KR)
(74) Representative: Marks & Clerk LLP

(57) **Abstract**

Disclosed herein is a secondary battery including a vent through which gas may be discharged in the event of an internal event, and a method of manufacturing the same, and which provides a structure for ensuring a gas passage within the bottom-vented secondary battery to avoid destruction of a case if an event occurs or during thermal runaway due to an increase in degassing path in the secondary battery. To this end, there are provided a secondary battery, which includes a case, an electrode assembly in the case, a first cap plate coupled to the case, a vent opposite the first cap plate, and a gap-maintaining part for maintaining a gap between the electrode assembly and the vent, a method of manufacturing the same, and a vehicle including the secondary battery.

## Description

### BACKGROUND

### 1. Field

Aspects of embodiments of the present disclosure relate to a secondary battery, a method of manufacturing the same and a vehicle comprising the same.

### 2. Description of the Related Art

Unlike primary batteries, which are not designed to be (re)charged, secondary (or rechargeable) batteries are batteries that are designed to be discharged and recharged. Low-capacity secondary batteries may be used in portable, small electronic devices, such as smart phones, feature phones, notebook computers, digital cameras, and camcorders, while large-capacity secondary batteries may be widely used as power sources for driving motors in hybrid vehicles and electric vehicles, and for storing power (e.g., home and/or utility scale power storage).

A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Aspects of embodiments of the present disclosure relate to a secondary battery including a vent through which gas is discharged in the event of an internal event, and a method of manufacturing the same.

In the case where a bottom-vented secondary battery (e.g., a so-called tall cell with an extended vertical length/height) has a vent installed at the bottom of the case thereof, the case (can) may be destroyed if an event occurs, or during thermal runaway due to an increase in degassing path.

Various embodiments propose a structure for ensuring a gas passage within a secondary battery to improve degassing performance of the secondary battery.

In one or more embodiments, there is provided a secondary battery that includes a case, an electrode assembly in the case, a first cap plate coupled to the case, a vent opposite the first cap plate, and a gap-maintaining part for maintaining a gap between the electrode assembly and the vent.

The gap-maintaining part may be in the case and may face the electrode assembly.

The secondary battery may further include a second cap plate opposite the first cap plate, wherein the vent is on the second cap plate, and wherein the gap-maintaining part is on a surface of the second cap plate that faces the electrode assembly.

The gap between the electrode assembly and the vent may be about 0.7 mm or more.

The gap-maintaining part may include two or more parts.

The gap-maintaining part may include two or more parts positioned symmetrically with respect to the vent.

The secondary battery may include a cylindrical secondary battery.

The secondary battery may include a prismatic secondary battery.

The case may have a prismatic battery shape with a pair of opposite short sides and a pair of opposite long sides, wherein the gap-maintaining part includes a linear projection extending in a direction perpendicular to the short sides.

The case may have a prismatic battery shape with a pair of opposite short sides and a pair of opposite long sides, wherein the gap-maintaining part is a linear projection extending in a direction perpendicular to the long sides of the case.

The gap-maintaining part may be a projection protruding toward the electrode assembly.

In one or more other embodiments, there is provided a method of manufacturing secondary batteries, which includes providing an electrode assembly, providing a case for housing the electrode assembly, coupling a first cap plate to the case, forming a vent at a position opposite the first cap plate, and forming a gap-maintaining part configured to maintain a gap between the electrode assembly and the vent.

The gap-maintaining part may be at a surface of the case opposite the first cap plate and faces the electrode assembly.

The method may further include installing a second cap plate in the case opposite the first cap plate, wherein the vent is on the second cap plate, and wherein the gap-maintaining part is on a surface of the second cap plate facing the electrode assembly.

The gap between the electrode assembly and the vent may be about 0.7 mm or more.

The gap-maintaining part may include two or more parts.

In one or more other embodiments, there is provided a vehicle including the second battery/one or more secondary battery packs having the above-mentioned configuration.

However, the present disclosure is not limited to the above, and other aspects not specifically mentioned herein, and aspects of the present disclosure that would address such problems, will be clearly understood by those skilled in the art from the description of the present disclosure below.

According to embodiments of the present disclosure, in a bottom-vented secondary battery (e.g., a cylindrical, prismatic, or coin-type secondary battery with an extended vertical length relative to its horizontal length, also referred to as a tall cell), by maintaining a constant distance (e.g., about 0.7 mm or more) between the facing surface of the cap assembly (including the first cap plate) of the case and the electrode assembly therein, it is possible to ensure a gas discharge passage if an event occurs or during thermal runaway, and to thereby improve degassing performance.

In a vehicle equipped with the secondary battery with the vent at the bottom thereof according to the present disclosure, degassing may be performed at the bottom of the vehicle (e.g., toward the ground), even if an event occurs or during thermal runaway, which can promote the safety of passengers. It may be possible to further enhance safety, because the gas discharge passage may be ensured at all times.

At least some of the above and other features of the invention are set out in the claims. Preferred features are set out in the dependent claims.

However, aspects of the present disclosure are not limited to those described above, and other aspects not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects of the present disclosure together with the detailed description of the present disclosure. Thus, the present disclosure should not be construed as being limited to the drawings:
FIG. 1 is a cross-sectional view of a cylindrical secondary battery;
FIG. 2A is a top perspective view of a prismatic secondary battery;
FIG. 2B is a cross-sectional view taken along the line I-I' of FIG. 2A;
FIG. 3A is a schematic view of a prismatic secondary battery as a bottom-vented secondary battery according to one or more embodiments of the present disclosure;
FIG. 3B is a schematic view of a prismatic secondary battery as a bottom-vented secondary battery according to one or more other embodiments of the present disclosure;
FIG. 4 is a schematic cross-sectional view of the bottom-vented secondary battery illustrated in FIGS. 3A and 3B;
FIG. 5 is a graph illustrating a relationship between bottom space (gap) and internal pressure;
FIG. 6A is a schematic cross-sectional view of a bottom-vented secondary battery according to one or more embodiments of the present disclosure;
FIG. 6B is a schematic cross-sectional view of a bottom-vented secondary battery according to one or more other embodiments of the present disclosure;
FIGS. 7A and 7B are respectively a top view and a perspective view illustrating an example of a gap-maintaining part;
FIGS. 8A and 8B are respectively a top view and a perspective view illustrating another example of a gap-maintaining part;
FIGS. 9A and 9B are respectively a top view and a perspective view illustrating a further example of a gap-maintaining part;
FIG. 10 is a perspective view of a secondary battery module in which prismatic secondary batteries are arranged according to one or more embodiments of the present disclosure;
FIG. 11 is a perspective view of a secondary battery pack including the secondary battery module illustrated in FIG. 10; and
FIG. 12 is a conceptual view of a vehicle including the secondary battery pack illustrated in FIG. 11.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of one or more embodiments of the present disclosure and do not represent all of the aspects of the present disclosure. Accordingly, it should be understood that there may be various equivalents and modifications that can replace or modify one or more embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

Examples of secondary batteries include a coin type, a cylindrical type, a prismatic type, a pouch type, etc. The present disclosure may be applicable to cylindrical and prismatic secondary batteries. The cylindrical and prismatic secondary batteries will first be briefly described prior to description of embodiments of the present disclosure.

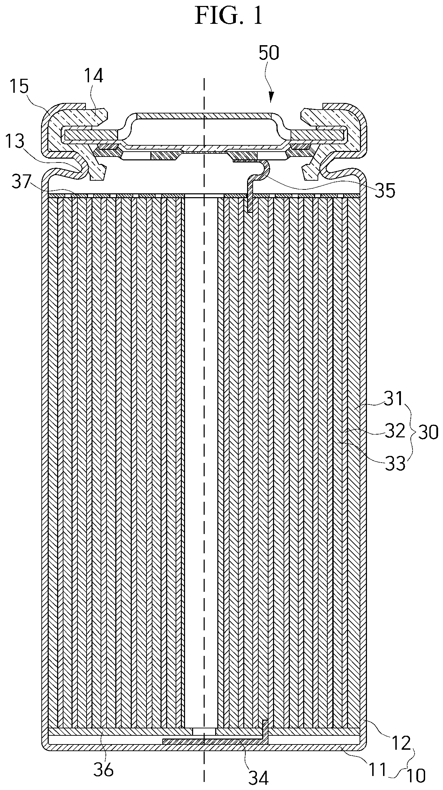

FIG. 1 illustrates a cylindrical secondary battery. As shown in FIG. 1, a secondary battery includes an electrode assembly 30, a case 10 accommodating the electrode assembly 30 and an electrolyte therein, a cap assembly 50 coupled to an opening of the case 10 to seal the case 10, and an insulating plate 37 positioned between the electrode assembly 30 and the cap assembly 50 inside the case 10.

The electrode assembly 30 may include a first electrode 33 and a second electrode 31 with a separator 32 therebetween, and may be wound in a jelly-roll shape.

The first electrode 33 may include a first substrate, and a first active material layer on the first substrate. A first lead tab 35 may extend outwardly from a first uncoated portion of the first substrate at where the first active material layer is not located. The first lead tab 35 may be electrically connected to the cap assembly 50.

The second electrode 31 may include a second substrate, and a second active material layer on the second substrate. A second lead tab 34 may extend outwardly from a second uncoated portion of the second substrate at where the second active material layer is not located, and the second lead tab 34 may be electrically connected to the case 10. The first lead tab 35 and the second lead tab 34 may extend in opposite directions.

The first electrode 33 may act as a positive electrode. In such embodiments, the first substrate may be made of, for example, an aluminum foil, and the first active material layer may include, for example, a transition metal oxide. The second electrode 31 may act as a negative electrode. In such embodiments, the second substrate may be made of, for example, a copper foil or a nickel foil, and the second active material layer may include graphite, for example.

The separator 32 reduces or prevents the likelihood of a short circuit between the first electrode 33 and the second electrode 31, while allowing movement of lithium ions therebetween. The separator 32 may be made of, for example, a polyethylene film, a polypropylene film, a polyethylene-polypropylene film, or the like.

The case 10 accommodates the electrode assembly 30 and the electrolyte, and together with the cap assembly 50, forms the external appearance of the secondary battery. The case 10 may have a substantially cylindrical body portion 12, and a bottom portion 11 connected to one side (e.g., to one end) of the body portion 12. A beading part 13 (e.g., a bead) deformed inwardly may be formed in the body portion 12, and a crimping part 15 (e.g., a crimp) bent inwardly may be formed at an open end of the body portion 12.

The beading part 13 can reduce or prevent movement of the electrode assembly 30 inside the case 10, and can facilitate seating of a gasket 14 and the cap assembly 50. The crimping part 15 may firmly fix the cap assembly 50 by pressing the edge of the case 10 against the gasket 14. The case 10 may include iron plated with nickel, for example.

The cap assembly 50 may be fixed to the inside of the crimping part 15 by the gasket 14 to seal the case 10. The cap assembly 50 may include a cap up, a safety vent, a cap down, an insulating member, and a sub plate, but the cap assembly is not limited thereto, and may be modified in various ways.

The cap up may be positioned at the uppermost part of the cap assembly 50. The cap up may include a terminal part that protrudes upwardly, and that is connected to an external circuit, and an outlet for discharging gas may be arranged around the terminal part.

The safety vent may be located under the cap up. The safety vent may include a protrusion part that protrudes convexly downwardly, and that is connected to the sub plate, and at least one notch may be formed in the safety vent around the protrusion part.

If gas is generated due to overcharging or due to abnormal operation of the secondary battery, the protrusion part may be deformed upwardly by the pressure, and may separate from the sub plate while the safety vent is cut (e.g., bursts or tears) along the notch. The cut safety vent may reduce or prevent the likelihood of the secondary battery exploding by allowing for the gas to be discharged to the outside.

The cap down may be below the safety vent. The cap down may have a first opening for exposing the protrusion part of the safety vent, and may have a second opening for gas discharge. The insulating member may be positioned between the safety vent and the cap down to insulate the safety vent and the cap down.

The sub plate may be under the cap down. The sub plate may be fixed to a lower surface of the cap down to block the first opening of the cap down. The protrusion part of the safety vent may be fixed to the sub plate. The first lead tab 35, which may be drawn out from the electrode assembly 30, may be fixed to the sub plate. In one or more embodiments, the cap up, the safety vent, the cap down, and the sub plate may be electrically connected to the first electrode 33 of the electrode assembly 30.

The insulating plate 37 may be positioned to contact the electrode assembly 30 below the beading part 13. The insulating plate 37 may have a tab opening through which the first lead tab 35 is drawn out. The cap assembly 50, which is electrically connected to the first electrode 33 by the first lead tab 35, may face the electrode assembly 30 with the insulating plate 37 interposed therebetween. The cap assembly 50 may maintain a state of being insulated (e.g., electrically insulated) from the electrode assembly 30 by the insulating plate 37. In one or more embodiments, another insulating plate 36 may be included for insulation between the electrode assembly 30 and the bottom portion 11 of the case 10.

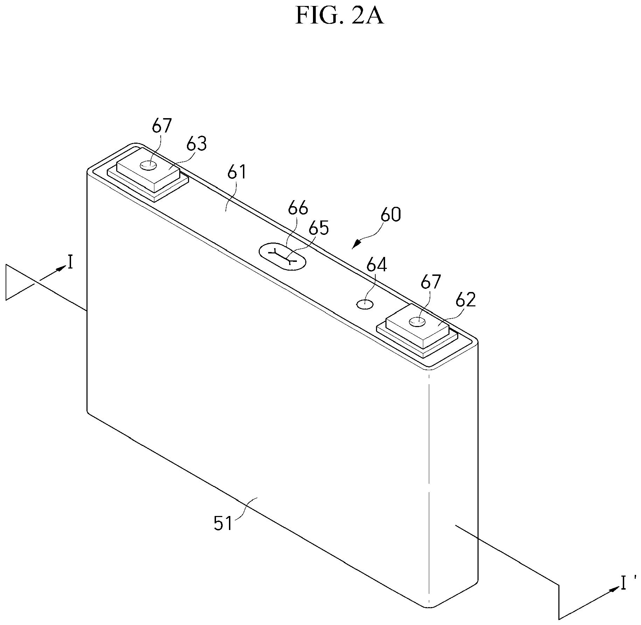

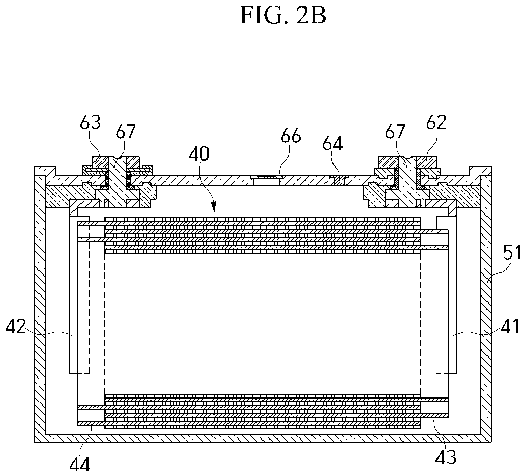

FIG. 2A is a top perspective view of a prismatic secondary battery. FIG. 2B is a cross-sectional view taken along the line I-I' of FIG. 2A.

First, the external appearance of the prismatic secondary battery illustrated in FIG. 2A will be described.

A case 51 defines an overall appearance of the prismatic secondary battery, and may be made of a conductive metal, such as aluminum, aluminum alloy, or nickel-plated steel. In one or more embodiments, the case 51 may provide a space for accommodating an electrode assembly therein.

A cap assembly 60 may include a cap plate 61 that covers the opening of the case 51, and the cap assembly 60 and the cap plate 61 may be made of a conductive material. Here, a first terminal 62 and a second terminal 63 may be electrically connected to respective positive and negative (or negative and positive) electrodes inside the case, and may be installed to protrude outwardly through the cap plate 61.

The cap plate 61 may be equipped with an electrolyte injection port 64 for installing a sealing plug (or seal pin), and a vent 66 formed with a notch 65. The vent 66 may discharge gas generated inside the secondary battery.

With reference to FIG. 2B, the internal structure of the prismatic secondary battery and the coupling structure with the cap assembly 60 will be described.

As shown in FIG. 2B, the prismatic secondary battery may include an electrode assembly 40, a first current collector 41, the first terminal 62, a second current collector 42, the second terminal 63, the case 51, and the cap assembly 60.

The electrode assembly 40 may be formed by winding or stacking a stack of a first electrode plate, a separator, and a second electrode plate, which are formed as thin plates or films. If the electrode assembly 40 is a wound stack, a winding axis may be parallel to the longitudinal direction (e.g., the y direction) of the case 51. In other embodiments, the electrode assembly 40 may be a stack type rather than a winding type, and the shape of the electrode assembly 40 is not limited in the present disclosure. In one or more embodiments, the electrode assembly 40 may be a Z-stack electrode assembly in which a positive electrode plate and a negative electrode plate are respectively inserted into both sides of a separator, which is then bent into a Z-stack. In one or more embodiments, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. In one or more embodiments, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, if the first electrode plate is manufactured, the first electrode tab 43 may be formed by being cut in advance to protrude to one side of the electrode assembly 40, or the first electrode tab 43 may protrude to one side of the electrode assembly 40 more than (e.g., farther than, or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly if the second electrode plate is manufactured, or the second electrode plate may protrude to the other side of the electrode assembly more than (e.g., farther than or beyond) the separator without being separately cut.

In some embodiments, the first electrode tab 43 may be located on the right side of the electrode assembly 40, and the second electrode tab 44 may be located on the left side of the electrode assembly 40. In other embodiments, the first electrode tab 43 and the second electrode tab 44 may be located on one side of the electrode assembly 40 in the same direction. Here, for convenience of description, the left and right sides are defined according to the secondary battery as oriented in FIG. 2A, and the positions thereof may change if the secondary battery is rotated left and right or up and down.

The separator reduces or prevents the likelihood of a short circuit between the first electrode and the second electrode, while allowing movement of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate may be respectively positioned at both ends (e.g., opposite ends) of the electrode assembly 40. In some embodiments, the electrode assembly 40 may be accommodated in the case 10 along with an electrolyte. In one or more embodiments, in the electrode assembly 40, the first current collector 41 and the second current collector 42 may be respectively welded and connected to the first electrode tab 43 of the first electrode plate and the second electrode tab 44 of the second electrode plate exposed on both sides to be positioned thereat.

As mentioned above, in some embodiments in which the first electrode tab 43 and the second electrode tab 44 are located at the top of the electrode assembly 40, the first and second current collectors 41 and 42 are located at the top of the electrode assembly 40.

The first current collector 41 and the second current collector 42 may be respectively connected to the first terminal 62 and the second terminal 63 described in FIG. 2A through connection members 67. In some embodiments, the connection members 67 may each have an outer peripheral surface that is threaded, and may be fastened to the first terminal 62 and the second terminal 63 (e.g., by screws, by riveting, or by welding).

In the cylindrical and prismatic secondary batteries described above with reference to FIGS. 1, 2A, and 2B, the vent for degassing is illustrated as being installed in the cap assembly 50 and 60, but in one or more other embodiments, the vent may be installed at a position facing/opposite the cap assembly 50 and 60.

Hereinafter, for convenience of understanding, the position where the cap assembly 50 and/or 60 is present will be referred to as a "top," whereas the position facing/opposite the cap assembly 50 and/or 60 will be referred to as a "bottom."

As described above, the vent installed at the position facing/opposite the cap assembly 50 and/or 60 (e.g., if it is used for a hybrid or electric vehicle) may discharge gas to the underside of the vehicle (e.g., toward the ground), thereby ensuring safety for passengers and environment. In this specification, the secondary battery with a vent installed at the bottom thereof will be referred to as a "bottom-vented secondary battery." This bottom-vented secondary battery is applicable to a secondary battery (so-called a tall cell) with an extended vertical length relative to its horizontal length, but the present disclosure is not limited thereto.

Hereinafter, embodiments of a bottom-vented secondary battery according to the present disclosure will be described.

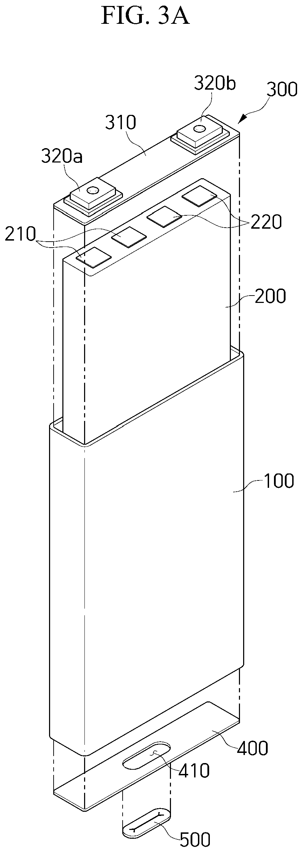

FIG. 3A is a schematic view of a prismatic secondary battery as a bottom-vented secondary battery according to one or more embodiments of the present disclosure. The prismatic secondary battery illustrated in FIG. 3A may have a structure with an extended vertical length structure (e.g., tall cell) compared to the prismatic secondary battery shown in FIG. 2A, but the present disclosure is not limited thereto.

An electrode assembly 200 in the form of a jelly-roll or stack may be built and placed into a case 100, and a cap assembly 300 may be located in an upper opening of the case 100. The cap assembly 300 may include a first cap plate 310, a first terminal 320a, and a second terminal 320b.

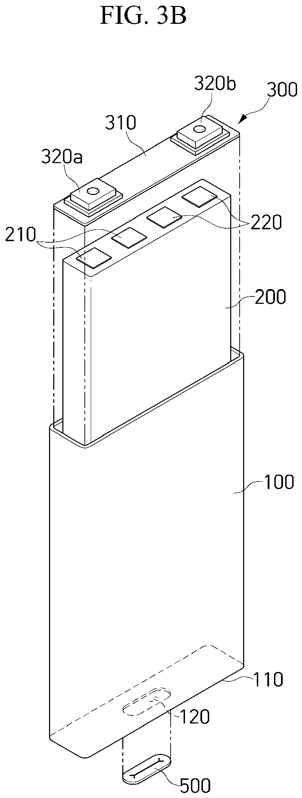

In FIG. 3A (and in FIG. 3B), a first electrode tab(s) 210 and a second electrode tab 220(s) are illustrated as being located on the upper surface of the electrode assembly 200 within the case 100, but this is a conceptual illustration of one example, and the present disclosure and the following embodiments are not limited thereto. For example, there also may be a secondary battery with a side-tab structure in which electrode tabs are located on both sides thereof.

A second cap plate 400 may be installed at the opening of the bottom of the case 100 (e.g., a position facing, or opposite to, the cap assembly 300 or the first cap plate 310 mentioned above). The second cap plate 400 may have a gas discharge hole 410 formed therein. A vent 500, which may be ruptured by the gas within the case 100, may be attached to/in the gas discharge hole 410 by welding or the like.

FIG. 3B is a schematic view of a prismatic secondary battery as a bottom-vented secondary battery according to one or more other embodiments of the present disclosure.

Similar to one or more embodiments of FIG. 3A, an electrode assembly 200 may be built into a case 100, and a cap assembly 300 may be installed in an upper opening of the case 100. In one or more embodiments, the case 100 in one or more embodiments of FIG. 3B may have a bottom portion 110 connected to the side thereof, and blocked on the underside thereof, unlike that of FIG. 3A.

The case's bottom portion 110 may have a gas discharge hole 120 formed therein, and a vent 500, which may be ruptured by the gas within the case 100, may be attached to the gas discharge hole 120 by welding or the like.

The cap assembly 300 may include a first cap plate 310, a first terminal 320a, and a second terminal 320b. Similar to one or more embodiments of FIG. 3A, a first electrode tab(s) 210 and a second electrode tab(s) 220 may be located on the upper surface of the electrode assembly 200.

As described above, in the bottom-vented secondary battery illustrated in FIGS. 3A and 3B (e.g., if the battery has a tall cell structure with an extended vertical length) the case (or can) may be ruptured if an event occurs, or during thermal runaway, due to an increase in degassing path. It may be suitable to ensure a gas discharge passage to improve degassing performance.

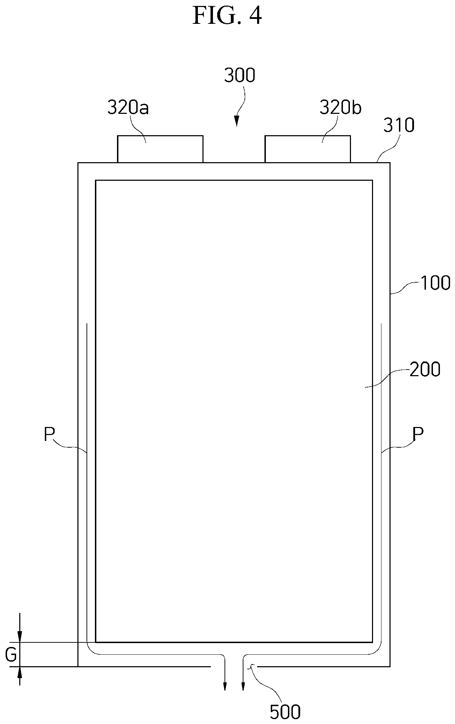

The suitability of ensuring the gas discharge passage will be described with reference to FIG. 4. FIG. 4 is a schematic cross-sectional view of the bottom-vented secondary batteries illustrated in FIGS. 3A and 3B.

If an event occurs inside the case 100, gas may be suitably discharged (e.g., degassing may be suitably performed) through the vent 500 at the bottom thereof. To this end, it may be suitable to maintain a gap between the electrode assembly 200 and the vent 500 to ensure a gas discharge passage P.

To ensure the gas discharge passage P, the distance between the vent 500, which may be installed on the case bottom portion 110 or the second cap plate 400, and the lower portion of the electrode assembly 200 (e.g., the distance between the inner surface of the case bottom portion 110 or second cap plate 400 and the lower portion of the electrode assembly 200, which is hereinafter referred to as bottom gap G) may be suitably maintained at a certain value or more.

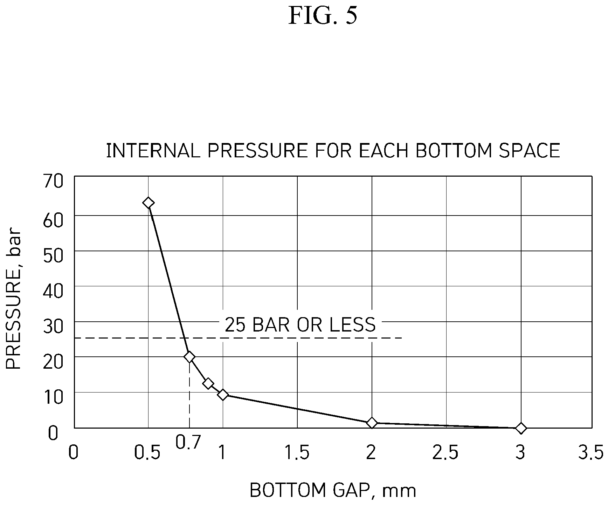

The basis for the existence of the bottom gap G can be seen in a graph of the relationship between a bottom space (or gap) and internal pressure, as illustrated in FIG. 5. In some examples, the secondary battery may suitably have an in-cell pressure of about 25 bar or less. As illustrated in FIG. 5, if the bottom gap G is about 0.7 mm or more, the internal pressure is about 25 bar or less. It may be suitable such that the bottom gap G be set to about 0.7 mm or more. In consideration of design margins, it may be suitable that the gap be set to about 1 mm or more, corresponding to a pressure of about 10 bar.

To ensure and maintain the bottom gap G, an injection-molded part may be installed between the electrode assembly 200 and the case bottom portion 110 or the second cap plate 400. It may be difficult to maintain the ensured bottom gap G because the injection-molded part may be deformed or destroyed by melting or burning due to in-cell heat generation.

To address this issue, a gap-maintaining part may be installed on the second cap plate 400 or the case bottom portion 110 of the bottom-vented secondary battery with the vent 500 at the bottom thereof, such as those illustrated purely by way of example in FIGS. 3A and 3B, so as to maintain the gap from the electrode assembly 200 with the bottom gap G suitable for ensuring the gas discharge passage (as mentioned above, about 0.7 mm or more, or about 1 mm or more). As a result, it is possible to improve degassing performance by ensuring the gas discharge passage, even if an event such as heat generation occurs or during thermal runaway.

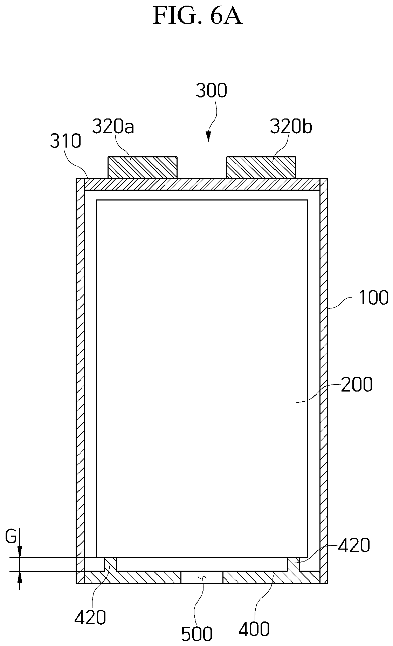

FIG. 6A is a schematic cross-sectional view of a bottom-vented secondary battery according to one or more embodiments of the present disclosure. The battery illustrated in FIG. 6A has a structure corresponding to the secondary battery having the case 100 with the second cap plate 400 installed thereto, as shown in FIG. 3A.

To ensure the bottom gap G between the second cap plate 400 and the electrode assembly 200 within the case 100, a gap-maintaining part 420 may be formed to protrude toward the electrode assembly 200 from the inner surface of the second cap plate 400. The gap-maintaining part 420 may have a protruding height that allows the bottom gap G between the lower portion of the electrode assembly 200 and the vent 500 to be about 0.7 mm or more.

The gap-maintaining part 420 may be formed on the second cap plate 400 in various ways.

In one or more embodiments, the gap-maintaining part 420 may be manufactured integrally during manufacture of the second cap plate 400. For example, if the second cap plate 400 may be manufactured by casting, the gap-maintaining part 420 may be cast concurrently or substantially simultaneously by means of the same mold. As another example, the gap-maintaining part 420 may protrude by manufacturing the second cap plate 400 and then pressing the corresponding portion(s) thereof.

In one or more other embodiments, the second cap plate 400 and the gap-maintaining part 420 may be manufactured separately, and then may be bonded to each other. For example, after the second cap plate 400 and the gap-maintaining part 420 have been manufactured separately, the gap-maintaining part 420 may be coupled to the second cap plate 400 by welding or any other bonding techniques (adhering, riveting, bolting, etc.).

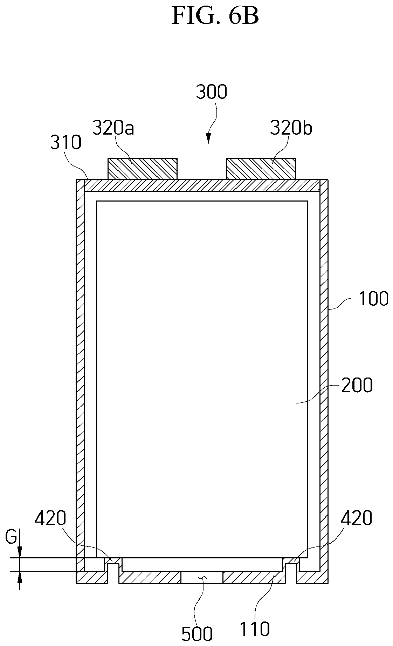

FIG. 6B is a schematic cross-sectional view of a bottom-vented secondary battery according to one or more other embodiments of the present disclosure. The battery illustrated in FIG. 6B has a structure corresponding to the prismatic secondary battery having the case bottom portion 110 in FIG. 3B.

To ensure the bottom gap G between the electrode assembly 200 and the case bottom portion 110, a gap-maintaining part 420 may be formed to protrude toward the electrode assembly 200 from the inner surface of the case bottom portion 110. Similar to one or more embodiments of FIG. 6A, the gap-maintaining part 420 may have a protruding height that allows the bottom gap G between the lower portion of the electrode assembly 200 and the vent 500 to be about 0.7 mm or more (e.g., about 1 mm or more).

The gap-maintaining part 420 may be formed on the case bottom portion 110 in various ways.

In one or more embodiments, the gap-maintaining part 420 may be manufactured integrally during manufacture of the case 100. For example, the gap-maintaining part 420 may protrude by pressing, or deforming, the corresponding portion of the case bottom portion 110 during manufacture of the case 100.

In one or more other embodiments, the case bottom portion 110 and the gap-maintaining part 420 may be manufactured separately, and then may be bonded to each other. For example, after the case 100 and the gap-maintaining part 420 have been manufactured separately, the gap-maintaining part 420 may be coupled to the bottom portion 110 of the case 100 by welding or any other bonding techniques (e.g., adhering, riveting, bolting, etc.).

In some embodiments, the gap-maintaining part 420 may have various shapes, such as a rib, a linear projection, a vertical wall, a cylindrical or polygonal pillar (or column), embossing, etc.

The gap-maintaining part 420 may include a plurality of gap-maintaining parts, in which case the separation distance between the plurality of gap-maintaining parts may be less than the maximum width of the electrode assembly 200. In one or more embodiments, if there are a plurality of gap-maintaining parts 420, the gap-maintaining parts 420 may be positioned symmetrically with the vent 500 centered thereon.

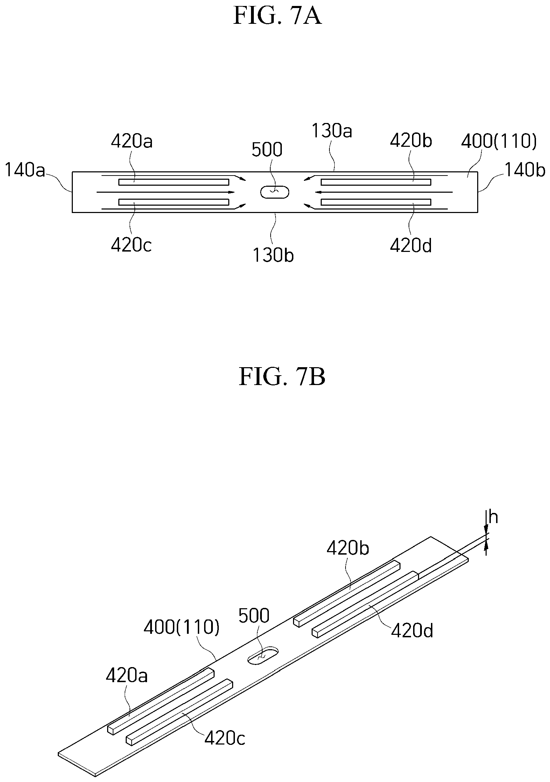

Now, the gap-maintaining part 420 will be described in detail. FIGS. 7A to 9B are top views illustrating various shapes of the gap-maintaining part 420, and may illustrate the second cap plate 400 or the case bottom portion 110 if viewed from the inside of the case 100.

The gap-maintaining part 420 may be installed to reduce or minimize interference with the flow of gas within the case 100 while maintaining the gap between the electrode assembly 200 and the vent 500 (e.g., the bottom gap G).

FIGS. 7A and 7B illustrate an example of a gap-maintaining part 420. Around the vent 500, gap-maintaining parts 420a, 420b, 420c, and 420d, each in the form of a wall or a linear projection elongated in the general direction of flow of gas (see arrow direction), may be installed on the second cap plate 400 or the case bottom portion 110. For example, from among a pair of facing/opposite first sides (e.g., long sides 130a and 130b) and a pair of facing/opposite second sides (e.g., short sides 140a and 140b) of the second cap plate 400 or of the case bottom portion 110, each of the installed gap-maintaining parts 420a, 420b, 420c, and 420d may have a length in a direction perpendicular to the second sides (short sides 140a and 140b). The gap-maintaining parts 420a, 420b, 420c, and 420d each may have a height h of about 0.7 mm or more, or about 1 mm or more, as mentioned above.

The above configuration allows the distance from the electrode assembly 200 to be maintained without interfering with the flow path of gas from both sides of the case 100 toward the vent 500. Here, the number of gap-maintaining parts is not limited to the four (e.g., 420a, 420b, 420c, and 420d) as illustrated in the drawing. In one or more embodiments, the shape of each gap-maintaining part is not limited to the linear wall or projection as illustrated in the drawing. Depending on the size of the electrode assembly 200, the number and individual shape of these gap-maintaining parts 420a, 420b, 420c, and 420d may be changed appropriately.

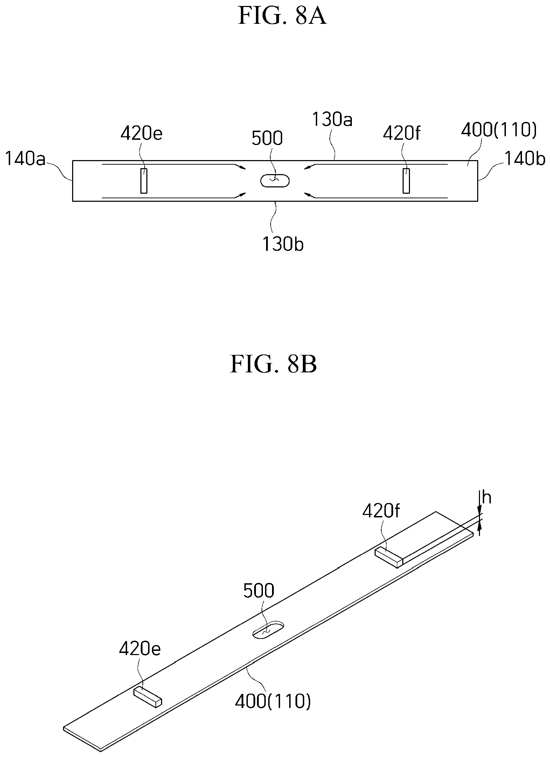

FIGS. 8A and 8B illustrate another example of a gap-maintaining part 420. Two gap-maintaining parts 420e and 420f may be installed to face each other with the vent 500 therebetween on the second cap plate 400 or on the case bottom portion 110. Each of these gap-maintaining parts 420e and 420f may be in the form of a wall or a linear projection having a short length in the width direction of the second cap plate 400 or of the case bottom portion 110. For example, from among a pair of facing/opposite first sides (e.g., long sides 130a and 130b) and a pair of facing/opposite second sides (e.g., short sides 140a and 140b) of the second cap plate 400 or the case bottom portion 110, each of the installed gap-maintaining parts 420e and 420f may have a length in a direction perpendicular to the long sides 130a and 130b.

The gap-maintaining parts 420e and 420f may each have a length set so as not to interfere with the flow of gas (arrow direction). The gap-maintaining parts 420e and 420f may each have a height h of about 0.7 mm or more, or about 1 mm or more, as mentioned above.

Here, the number of gap-maintaining parts is not limited to the two (e.g., 420e and 420f) as illustrated in the drawing. In one or more embodiments, the shape of each gap-maintaining part is not limited to the shape of the wall or the linear projection as illustrated in the drawing. Depending on the size of the electrode assembly 200, the number and arrangement of these gap-maintaining parts 420e and 420f may be changed appropriately. Furthermore, the distance between one gap-maintaining part 420e and the other gap-maintaining part 420f may be within the maximum range allowed by the horizontal width of the electrode assembly 200.

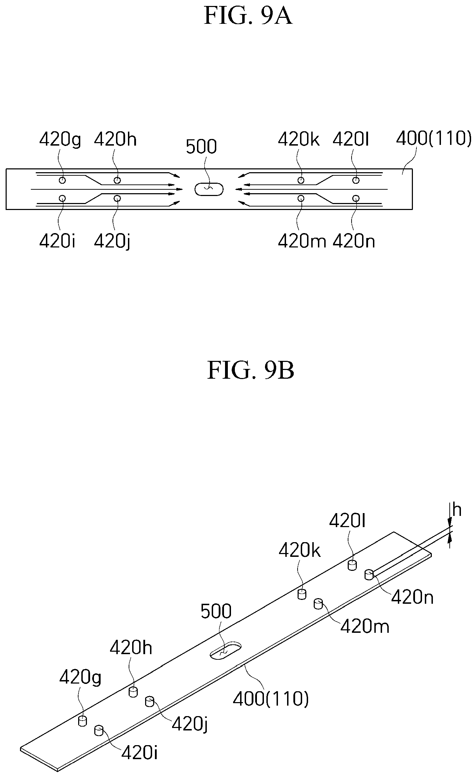

FIGS. 9A and 9B illustrate a further example of a gap-maintaining part 420. A plurality of gap-maintaining parts 420g, 420h, 420i, 420j, 420k, 420l, 420m, and 420n may be installed around the vent 500. Here, the gap-maintaining parts 420g, 420h, 420i, 420j, 420k, 420l, 420m, and 420n may be illustrated as each having a substantially cylindrical pillar shape, but the present disclosure is not limited thereto. For example, it may have a polygonal pillar shape, such as a square or a hexagon. Here, the number of gap-maintaining parts is not limited to eight (e.g., 420g, 420h, 420i, 420j, 420k, 420l, 420m, and 420n) as illustrated in the drawing. Depending on the size of the electrode assembly 200, the individual shape, number, and arrangement of these gap-maintaining parts 420g, 420h, 420i, 420j, 420k, 420l, 420m, and 420n may be changed appropriately.

A method of manufacturing the secondary battery, in which the vent 500 may be installed on the second cap plate 400 or the case bottom portion 110, having the same structure as described above will be described.

According to one or more embodiments of a method of manufacturing secondary batteries, an electrode assembly 200 may be manufactured, and a case 100 may be manufactured with the electrode assembly 200 built thereinto, and may be equipped with a vent 500 at the bottom thereof. In this case, the case 100 has a bottom portion 110 connected to the side thereof. A gap-maintaining part 420 may be formed on the case bottom portion 110 to maintain the gap between the electrode assembly 200 and the vent 500. In this case, the gap-maintaining part 420 may be formed on the case bottom portion 110 to face the electrode assembly during or after the manufacture of the case 100.

According to one or more other embodiments of a method of manufacturing secondary batteries, an electrode assembly 200 may be manufactured, and a case 100 may be manufactured with the electrode assembly 200 built thereinto. In this case, the case 100 may have an open bottom. A second cap plate 400, which may be manufactured separately, may be assembled on the open bottom. The second cap plate 400 may be equipped with a vent 500 and a gap-maintaining part 420.

Here, because the method of manufacturing other components and the method of forming the gap-maintaining part 420 correspond to the structure of the secondary battery described above, a description thereof will be omitted.

Hereinafter, any material that may be usable for the secondary battery according to the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, or combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001 ≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); or LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material, and may further include a binder and/or a conductive material.

The content of the positive electrode active material is in a range of about 90 wt% to about 99.5 wt% on the basis of about 100 wt% of the positive electrode active material layer, and the content of the binder and the conductive material may be in a range of about 0.5 wt% to about 5 wt%, respectively, on the basis of about 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x<2), a Si-based alloy, or a combination thereof.

The silicon-carbon composite may be a composite of silicon and amorphous carbon. According to one or more embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer located on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. If an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more. If a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

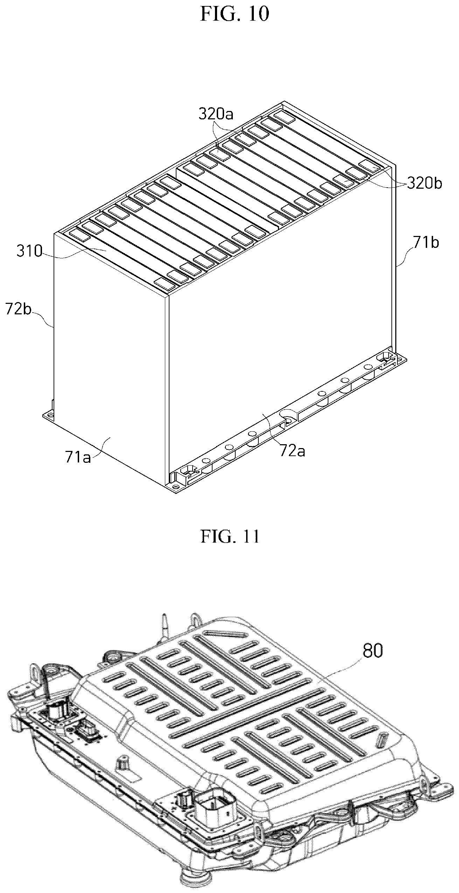

FIG. 10 is a perspective view of a secondary battery module in which prismatic secondary batteries (as illustrated in FIG. 3A or 3B) are arranged according to one or more embodiments of the present disclosure. With the increase in secondary battery capacity for driving electric vehicles or the like, a secondary battery module may be manufactured by arranging and connecting a plurality of secondary battery cells transversely and/or longitudinally. The plurality of secondary batteries may be arranged in a space defined by a pair of facing/opposite end plates 71a and 71b and a pair of facing/opposite side plates 72a and 72b. The secondary batteries may be designed appropriately in both arrangement (direction) and number to obtain desired voltage and current specifications.

FIG. 11 is a view schematically showing the configuration of a battery pack according to one or more embodiments of the present disclosure. Referring to FIG. 11, a battery pack, according to one or more embodiments of the present disclosure, includes an assembly to which individual batteries are electrically connected and a pack housing accommodating the same. In the drawings, for convenience of illustration, some components, including a bus bar, a cooling unit, external terminals for electrically connecting batteries, etc., are omitted.

The battery pack may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto.

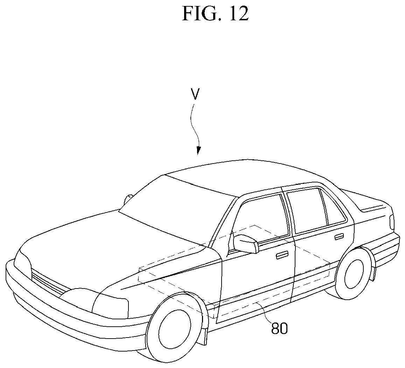

FIG. 12 is a view showing a vehicle according to one or more embodiments of the present disclosure including the battery pack shown in FIG. 11. Referring to FIG. 12, the vehicle, according to one or more embodiments of the present disclosure, may include a battery pack according to one or more embodiments of the present disclosure. The vehicle may operate by (e.g., may be powered by) receiving power from the battery pack.

Although the present disclosure has been described above with respect to embodiments thereof, the present disclosure is not limited thereto. Various modifications and variations can be made thereto by those skilled in the art within the scope of the appended claims, with functional equivalents thereof to be included therein.

Embodiments are set out in the following clauses:
Clause 1. A secondary battery comprising:
   a case equipped with an electrode assembly therein and coupled to a first cap plate;
   a vent installed at a position facing the first cap plate; and
   a gap maintaining part configured to maintain a gap between the electrode assembly and the vent.
Clause 2. The secondary battery as claimed in clause 1, wherein the gap maintaining part is formed at a position facing the first cap plate in the case to face the electrode assembly.
Clause 3. The secondary battery as claimed in clause 1 or clause 2, further comprising a second cap plate positioned to face the first cap plate, the vent being formed on the second cap plate,
   wherein the gap maintaining part is located on a surface of the second cap plate that faces the electrode assembly.
Clause 4. The secondary battery as claimed in any one of clauses 1 to 3, wherein the gap maintaining part is formed to maintain the gap between the electrode assembly and the vent at 0.7 mm or more.
Clause 5. The secondary battery as claimed in any one of clauses 1 to 4, wherein the gap maintaining part consists of two or more gap maintaining parts, and a separation distance between the two or more gap maintaining parts is within a maximum width of the electrode assembly.
Clause 6. The secondary battery as claimed in any one of clauses 1 to 5, wherein the gap maintaining part consists of two or more gap maintaining parts, and the gap maintaining parts are positioned symmetrically with the vent centered thereon.
Clause 7. The secondary battery as claimed in any one of clauses 1 to 6, wherein:
   the case has a prismatic battery shape with a pair of facing first sides and a pair of facing second sides; and
   the gap maintaining part is a linear projection extending in a direction perpendicular to the first sides of the case.
Clause 8. The secondary battery as claimed in any one of clauses 1 to 7, wherein:
   the case has a prismatic battery shape with a pair of facing first sides and a pair of facing second sides; and
   the gap maintaining part is a linear projection extending in a direction perpendicular to the second sides of the case.
Clause 9. The secondary battery as claimed in any one of clauses 1 to 8, wherein the gap maintaining part is a projection protruding from the vent in the case toward the electrode assembly.
Clause 10. A method of manufacturing secondary batteries comprising:
   manufacturing an electrode assembly;
   manufacturing a case equipped with the electrode assembly therein;
   manufacturing a first cap plate coupled to the case;
   forming a vent at a position facing the first cap plate; and
   forming a gap maintaining part configured to maintain a gap between the electrode assembly and the vent at a position facing the first cap plate.
Clause 11. The method as claimed in clause 10, wherein, in the forming a gap maintaining part step, the gap maintaining part is formed in, on or at a surface facing the first cap plate in the case to face the electrode assembly.
Clause 12. The method as claimed in clause 10, further comprising manufacturing a second cap plate installed at a position facing the first cap plate,
   wherein the vent is formed on the second cap plate, and the gap maintaining part is located on a surface of the second cap plate that faces the electrode assembly.
Clause 13. The method as claimed in any one of clauses 10 to 12, wherein, in the forming a gap maintaining part step, the gap maintaining part is formed to maintain the gap between the electrode assembly and the vent at 0.7 mm or more.
Clause 14. The method as claimed in any one of clauses 10 to 13, wherein, in the forming a gap maintaining part step, the gap maintaining part consists of two or more gap maintaining parts, and a separation distance between the two or more gap maintaining parts is within a maximum width of the electrode assembly.
Clause 15. A vehicle comprising the secondary battery as claimed in any one of clauses 1 to 9.

## Claims

1. A secondary battery comprising:
a case;
an electrode assembly in the case;
a first cap plate coupled to the case;
a vent opposite the first cap plate; and
a gap-maintaining part for maintaining a gap between the electrode assembly and the vent.

2. The secondary battery as claimed in claim 1, wherein the gap-maintaining part is in the case and faces the electrode assembly.

3. The secondary battery as claimed in claim 1 or claim 2, further comprising a second cap plate opposite the first cap plate,
wherein the vent is on the second cap plate, and
wherein the gap-maintaining part is on a surface of the second cap plate that faces the electrode assembly.

4. The secondary battery as claimed in any one of the preceding claims, wherein the gap between the electrode assembly and the vent is about 0.7 mm or more.

5. The secondary battery as claimed in any one of the preceding claims, wherein the gap-maintaining part comprises two or more parts, and optionally wherein the two or more parts are positioned symmetrically with respect to the vent.

6. The secondary battery as claimed in any one of the preceding claims, wherein the secondary battery comprises a cylindrical secondary battery.

7. The secondary battery as claimed in any one of claims 1 to 5, wherein the secondary battery comprises a prismatic secondary battery.

8. The secondary battery as claimed in any one of claims 1 to 5, wherein the case has a prismatic battery shape with a pair of opposite short sides and a pair of opposite long sides, and
wherein the gap-maintaining part comprises a linear projection extending in a direction perpendicular to either the short sides or the long sides.

9. The secondary battery as claimed in any one of the preceding claims, wherein the gap-maintaining part is a projection protruding toward the electrode assembly.

10. A method of manufacturing secondary batteries, the method comprising:
providing an electrode assembly;
providing a case for housing the electrode assembly;
coupling a first cap plate to the case;
forming a vent at a position opposite the first cap plate; and
forming a gap-maintaining part configured to maintain a gap between the electrode assembly and the vent.

11. The method as claimed in claim 10, wherein the gap-maintaining part is at a surface of the case opposite the first cap plate and faces the electrode assembly.

12. The method as claimed in claim 10 or claim 11, further comprising installing a second cap plate in the case opposite the first cap plate,
wherein the vent is on the second cap plate, and
wherein the gap-maintaining part is on a surface of the second cap plate facing the electrode assembly.

13. The method as claimed in any one of claims 11 to 12, wherein the gap between the electrode assembly and the vent is about 0.7 mm or more.

14. The method as claimed in any one of claims 10 to 13, wherein the gap-maintaining part comprises two or more parts.

15. A vehicle comprising the secondary battery as claimed in any one of claims 1 to 9.
